# EUROPÄISCHE PATENTSCHRIFT

(11) **EP 0 437 719 B1**
(45) Veröffentlichungstag und Bekanntmachung des Hinweises auf die Patenterteilung: **03.11.1993**
(21) Anmeldenummer: 90123342.9
(22) Anmeldetag: 05.12.1990
(51) Int. Cl.: F16H 61/40

(54) **Bremsventileinrichtung für ein hydrostatisches Getriebe**
Brake valve system for hydrostatic transmission
Système de soupape de freinage pour une transmission hydrostatique

(30) Priorität: 12.01.1990 DE 4000801
(43) Veröffentlichungstag der Anmeldung: 24.07.1991
(73) Patentinhaber: Hydromatik GmbH, 89275 Elchingen (DE)
(72) Erfinder: Wagenseil, Ludwig, W-7917 Vöhringen (DE)
(74) Vertreter: Körber, Wolfhart, Dr.rer.nat.

(56) Entgegenhaltungen:
- EP-A- 0 329 860
- DE-A- 3 118 516
- DE-B- 1 161 154

## Beschreibung

Die Erfindung bezieht sich auf eine Bremsventileinrichtung der im Oberbegriff des Patentanspruchs 1 genannten Art.

Bremsventileinrichtungen bei im offenen Kreislauf betriebenen hydrostatischen Getrieben sollen den am Hydromotor auftretenden Füllungsmangel an Druckmittel, vorzugsweise Hydrauliköl, verhindern. Dies ist beispielsweise dann erforderlich, wenn die am Hydromotor abgenommene Drehzahl (oder die Hubgeschwindigkeit einer dem Hydromotor äquivalenten Hubkolben-Zylindereinheit zur Bewegung eines Verbrauchers) die dem von der Hydropumpe zufließenden Druckmittelstrom entsprechende Drehzahl (oder Hubgeschwindigkeit) übersteigt. Ein solcher Füllungsmangel bzw. eine solche Drehzahlerhöhung, wobei der Hydromotor dann als Hydropumpe arbeitet, kann beispielsweise im Schubbetrieb eines vom Hydromotor angetriebenen Fahrzeugs auftreten, insbesondere bei dessen Bergabfahrt mit unter Bremsbelastung stehendem Hydromotor oder bei Umsteuerung der Drehrichtung des Hydromotors mittels des Umsteuer-Wegeventils. Der genannte Füllungsmangel an Druckmittel am Hydromotor führt zu unerwünschter Kavitation. Darüber hinaus ist ein Hydromotor ohne Bremsventileinrichtung der genannten Art, die nicht mit einer hydraulischen Betriebsbremse eines Verbrauchers zu verwechseln ist, nicht in der Lage, diesen Verbraucher, beispielsweise das angetriebene Fahrzeug, sanft abzubremsen.

Eine Bremsventileinrichtung der im Oberbegriff des Patentanspruchs 1 genannten Art ist beispielsweise aus der DE-B- 11 61 154 bekannt geworden. Die Hydropumpe des dort beschriebenen hydrostatischen Getriebes, insbesondere für Kraftfahrzeuge, fördert ein hydraulisches Druckmittel vom Tank über das Umsteuer-Wegeventil wahlweise über einen von zwei je ein Druckbegrenzungsventil enthaltenden Zweigen zu einem Hydromotor und von diesem zurück über den anderen Zweig und das Umsteuer-Wegeventil zum Tank. In den beiden Zweigen ist zwischen dem Umsteuer-Wegeventil und dem jeweiligen Druckbegrenzungsventil ein Bremsregelventil angebracht, das den Durchgang des Druckmittels durch den betreffenden Zweig in Abhängigkeit vom Druck im jeweils anderen Zweig steuert und von einer ein Rückschlagventil enthaltenden Leitung überbrückt ist. Der Maximaldruck, bei dem die in den Zweigen angeordneten Druckbegrenzungsventile ansprechen, sind nach einer dort beschriebenen Ausführungsform einstellbar.

Nachteilig an dieser bekannten Bremsventileinrichtung ist der Ventilaufwand und der vergleichsweise große Aufwand an Leitungsverbindungen, der zu einer umfangreichen Verschaltung führt.

Es ist Aufgabe der Erfindung, eine Bremsventileinrichtung der eingangs genannten Art mit verringerten Ventil- und Leitungsaufwand zu schaffen.

Zur Lösung dieser Aufgabe ist bei einer Bremsventileinrichtung der im Oberbegriff des Patentanspruchs 1 genannten Art eine in jedem Zweig angeordnete Ventileinheit vorgesehen, die das Rückschlagventil, das Bremsregelventil und das Druckbegrenzungsventil dadurch in sich vereinigt, daß ihr Ventilkörper als durch eine Feder in Richtung der Schließstellung beaufschlagter Schließkörper des Rückschlagventils, als Regelkolben des Bremsregelventils und als Gehäuse für das Schließelement des Druckbegrenzungsventils ausgebildet ist und mit einer vom Druckmittel in öffnungsrichtung beaufschlagbaren, mit einer Steuerkante oder einem Ventilsitz zusammenwirkenden Steuerfläche einen Steuerraum abgrenzt, wobei der in der Offenstellung befindliche Ventilkörper in Abhängigkeit vom Druck im jeweils anderen Zweig in Richtung Schließstellung gesteuert beaufschlagbar ist und auf diese Weise als Regelkolben im Zusammenwirken mit der Steuerkante bzw. dem Ventilsitz eine geregelte Drosselung des Druckmittelablaufs aus dem Steuerraum zum Tank hin bewirkt.

Die erfindungsgemäßen Ventileinheiten sind von kompakter Bauweise mit geringem Leitungsaufwand; sie vereinigen die drei entscheidenden Funktionen der üblichen Bremsventileinrichtungen, nämlich die Rückschlagventilfunktion in jedem Zweig für das dem Hydromotor zugeführte Druckmittel, die Bremsfunktion durch geregeltes Abführen von Druckmittel zum Tank, wenn der Hydromotor als Pumpe arbeitet, und die Druckbegrenzungsfunktion zur Sekundärabsicherung und Festlegung der maximalen, den Hydromotor abstützenden Bremskraft, wenn er als Pumpe arbeitet. Dabei sind das Rückschlagventil und das Bremsregelventil ein und dasselbe Ventil, das je nach Betriebszustand die beiden Funktionen, nämlich die Rückschlagfunktion und die Bremsregelfunktion ausübt.

Zur gesteuerten Druckmittelbeaufschlagung der Ventilkörper in Richtung Schließstellung ist es günstig, den Steuerraum und einen diesem abgewandten Gegensteuerraum jeder der beiden Ventileinheiten durch je eine mit einer Drossel versehene Verbindungsleitung miteinander zu verbinden. Vorzugsweise ist eine Vorsteuerventilanordnung vorgesehen, die den Druckmittelablauf aus den Gegensteuerräumen beider Ventileinheiten in Abhängigkeit vom Druck in dem die jeweils andere Ventileinheit enthaltenden Zweig steuert. Hierbei ist eine Ausbildung der Vorsteuerventilanordnung günstig, aufgrund welcher der Druckmittelablauf aus den Gegensteuerräumen beider Ventileinheiten oberhalb eines oberen Grenzdrucks im jeweils anderen Zweig völlig geöffnet ist und im Bereich zwischen dem oberen und einem unteren Grenzdruck gedrosselt geregelt sowie bei Erreichen des unteren Grenzdrucks völlig geschlossen wird. Dadurch wird erreicht, daß der im Normalbetrieb, d.h. bei Antrieb des Verbrauchers durch den Hydromotor, völlig freie Druckmittelablauf aus der im Zweig stromabwärts des Hydromotors befindlichen Ventileinheit beim übergang in den durch das Unterschreiten des oberen Grenzdrucks im jeweils anderen Zweig gekennzeichneten Bremsbetrieb, gedrosselt bzw. völlig geschlossen wird. Dabei ist eine Ausbildung der Vorsteuerventilanordnung als ein beiden Zweigen gemeinsames, stetig verstellbares federzentriertes 3/3-Wegeventil vorteilhaft. Günstig ist auch eine Vorsteuerventilanordnung in Form zweier stetig verstellbarer 2/2-Wegeventile, die je einer der Ventileinheiten zugeordnet sind.

Vorzugsweise sind der Steuerraum jeder Ventileinheit und die zugeordnete Steuerfläche durch je einen mit letzterer zusammenwirkenden Ventilsitz funktionell in einen Rückschlagventil-Steuerraum mit einer Rückschlagventil-Steuerfläche und einen Bremsregelventil-Steuerraum mit einer Bremsregelventil-Steuerfläche unterteilt.

Gemäß einer Weiterbildung der Erfindung ist das Druckbegrenzungsventil im Ventilkörper jeder Ventileinheit mit einem durch eine Schließfeder beaufschlagten Schließelement ausgebildet, dessen Ablaufraum mit dem Steuerraum der jeweils anderen Ventileinheit verbunden ist. Dadurch kann bei übermäßiger Bremsbelastung des Hydromotors überschüssiges Druckmittel, das die Durchflußkapazität der Drosselstelle zwischen der Bremsregelventil-Steuerfläche und dem Ventilsitz übersteigt, dem Hydromotor zugeführt werden.

Zur Erzielung einer besonders kompakten Bauweise und Einsparung von Leitungen sind beide Ventileinheiten und die Vorsteuerventilanordnung vorzugsweise in einem gemeinsamen Ventilblock ausgebildet.

Nachstehend ist die Erfindung anhand zweier Ausführungsbeispiele der erfindungsgemäßen Bremsventileinrichtung unter Bezugnahme auf die Zeichnung näher beschrieben. Es zeigen
- Fig. 1: das erste Ausführungsbeispiel der erfindungsgemäßen Bremsventileinrichtung als Teil eines hydrostatischen Getriebes, und
- Fig. 2: das zweite Ausführungsbeispiel der erfindungsgemäßen Bremsventileinrichtung als Teil eines hydrostatischen Getriebes.

Das in der Zeichnung dargestellte hydrostatische Getriebe mit offenem Kreislauf umfaßt einen Tank 1 für das hydraulische Druckmittel, eine mittels eines nicht gezeigten Antriebs antreibbare Hydropumpe 2 und einen Hydromotor 3 mit zwei Stromrichtungen. Die Hydropumpe 1 ist über eine Leitung 4 mit dem Tank 1 und über eine Leitung 5 mit einem 4/3-Umsteuer-Wegeventil 6 verbunden, das über Zweigleitungen 7 und 8 an den Eingang bzw. an den Ausgang des Hydromotors 3 angeschlossen ist.

Die erfindungsgemäße Bremsventileinrichtung 9 ist in einem zweigeteilten Ventilblock 10 ausgebildet und umfaßt zwei Ventileinheiten 11, 12 und eine Vorsteuerventilanordnung 13.

Jede Ventileinheit 11, 12 umfaßt einen Ventilkörper 14 in Form eines zylindrischen Kolbens, der in einer im Ventilblock 10 ausgebildeten Bohrung verschiebbar angeordnet ist und in dieser Bohrung mit einer Stirn- oder Steuerfläche 15 einen Steuerraum 16 und mit der gegenüberliegenden Stirnfläche 47 einen Federraum 17 mit darin angeordneter Feder 18 abgrenzt. Das den Steuerraum 16 zugeordnete Ventilkörperende ist kegelstumpfförmig mit einem ebenen und mit einem abgeschrägten Stirnflächenabschnitt ausgebildet. Ein den Steuerraum 16 funktionell in einen ersten Steuerraumbereich 19 und einen zweiten Steuerraumbereich 20 unterteilender Ventilsitz 21 wirkt mit dem abgeschrägten Stirnflächenabschnitt zusammen und unterteilt diesen ebenfalls funktionell in zwei Schrägflächenabschnitte. Der ebene Stirnflächenabschnitt mit dem angrenzenden Schrägflächenabschnitt bildet einen dem ersten Steuerraumbereich 19 zugeordneten ersten Steuerflächenanteil 22, während der verbleibende Schrägflächenabschnitt einen dem zweiten Steuerraumbereich 20 zugeordneten zweiten Steuerflächenanteil 23 bildet.

In jeder Ventileinheit 11, 12 ist ein Druckbegrenzungsventil mit einem durch eine Schließfeder 25 beaufschlagten Schließelement 24 integriert. Zu diesem Zweck ist jeder Ventilkörper 14 als Gehäuse mit einem Aufnahmeraum 26 für das Schließelement 24 und die Schließfeder 25 sowie mit einem angeschlossenen Ablaufraum 27 ausgebildet. Das Schließelement 24 verschließt mit einem kegelförmigen Ende eine den Aufnahmeraum 26 mit dem Steuerraum 16 verbindende axiale Durchgangsbohrung 28 im Ventilkörper 14. Die vom Druckmittel beaufschlagbaren Flächen im Aufnahmeraum 26 und im Ablaufraum 27 sind ausgeglichen, so daß einströmendes Druckmittel keine Bewegung des Ventilkörpers 14 hervorruft.

Beide Zweigleitungen 7, 8 umfassen je einen ersten Zweigleitungsabschnitt 29 und einen zweiten Zweigleitungsabschnitt 30. Die ersten Zweigleitungsabschnitte 29 verbinden das Umsteuer-Wegeventil 6 mit den zweiten Steuerraumbereichen 20 der Ventileinheiten 11 bzw. 12, während die zweiten Zweigleitungsabschnitte 30 die ersten Steuerraumbereiche 19 an den Hydromotor 3 anschließen.

Der Steuerraumbereich 19 und der Federraum 17 Jeder Ventileinheit 11, 12 sind durch je eine Verbindungsleitung 31 mit einer Drossel 32 miteinander verbunden. Der Ablaufraum 27 jeder Ventileinheit 11, 12 ist über je eine Anschlußleitung 33 an die Verbindungsleitung 31 der jeweils anderen Ventileinheit 12 bzw. 11 angeschlossen.

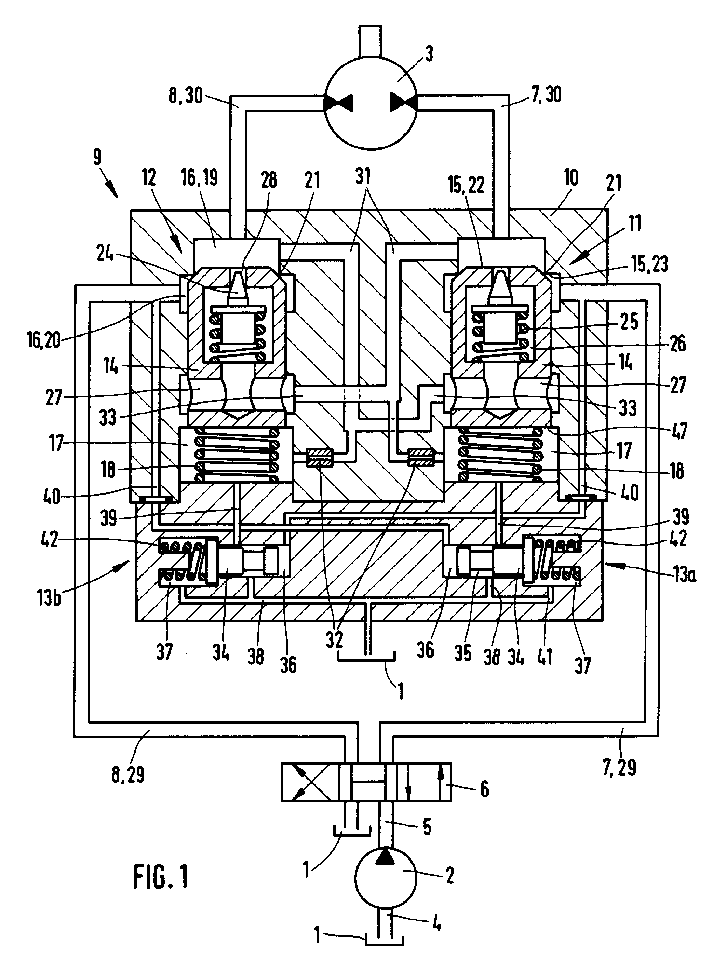

Die Vorsteuerventilanordnung 13 gemäß Fig. 1 besteht aus zwei stetig verstellbaren Vorsteuerventilen 13a und 13b in Form je eines 2/2-Wegeventils mit einem Steuerkolben 34, der einen Ringkanal 35 aufweist und einen Steuerölraum 36 sowie einen gegenüberliegenden Druckfederraum 37 abgrenzt. Jedes der beiden Vorsteuerventile 13a und 13b ist über je einen eigenen Entleerungsanschluß 38 an den Tank und über je einen eigenen Entlastungsanschluß 39 an den Federraum 17 der Ventileinheit 11 der rechten Zweigleitung 7 bzw. der Ventileinheit 12 der linken Zweigleitung 8 angeschlossen. Weiterhin steht jedes der beiden Vorsteuerventile 13a und 13b mit seinem Steuerölraum 36 über je einen eigenen Steuerkanal 40 mit dem ersten Zweigleitungsabschnitt 29 der jeweils anderen Zweigleitung 8 bzw. 7 in Verbindung und ist mit seinem Druckfederraum 37 über je einen eigenen Leckölabfluß 41 an den eigenen Entleerungsanschluß 38 angeschlossen. Die Steuerkolben 34 der beiden Vorsteuerventile 13a und 13b sind durch je eine Druckfeder 42 im jeweiligen Druckfederraum 37 in der Schließstellung gehalten, in der der jeweilige Entlastungsanschluß 39 gesperrt ist. Die Entleerungsanschlüsse 38 sind in sämtlichen Stellungen der Steuerkolben 34 geöffnet.

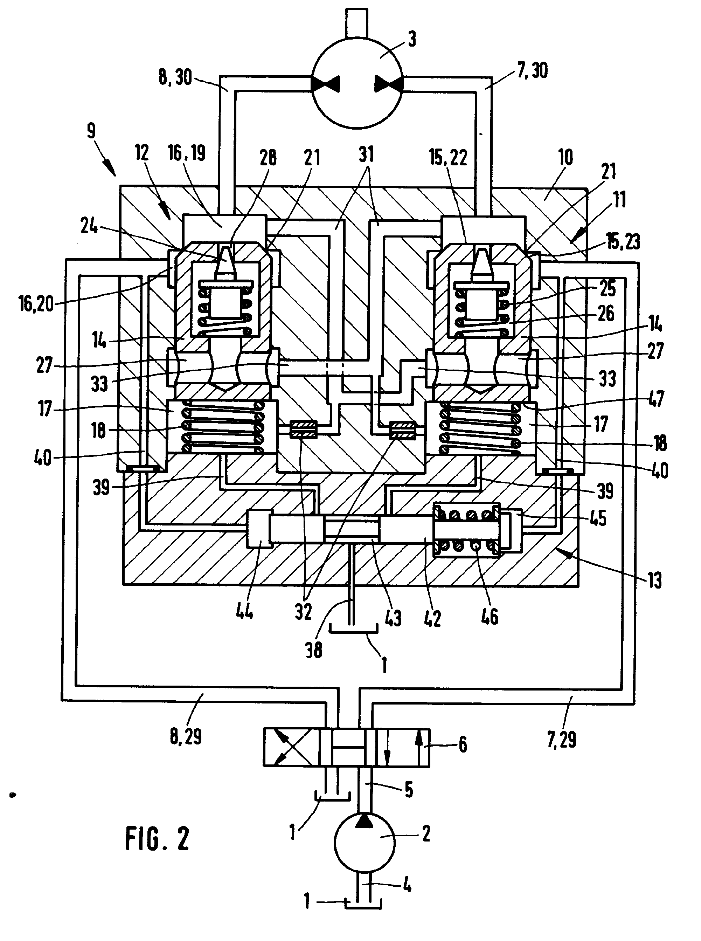

In der Ausführung gemäß Fig. 2 ist die Vorsteuerventilanordnung 13 als eine einzige, beiden Zweigleitungen 7, 8 gemeinsame Vorsteuerventileinheit 13 in Form eines stetig verstellbaren, federzentrierten 3/3-Wegeventils ausgebildet. Dieses Wegeventil ist mit einem Steuerkolben 42 versehen, der einen symmetrisch angeordneten Ringkanal 43 aufweist und zwei einander gegenüberliegende Steuerölräume 44, 45 abgrenzt. Beide Steuerölräume sind jeweils über einen eigenen Steuerkanal 40 an die ersten Zweigleitungsabschnitte 29 der rechten bzw. linken Zweigleitung 7, 8 angeschlossen. Im rechten Steuerölraum 45 befindet sich eine Zentrierfeder 46, die den Steuerkolben 42 in Richtung der Schließstellung beaufschlagt. Der Steuerkolben 42 sperrt in der Schließstellung zwei zu den Federräumen 17 der beiden Ventileinheiten 11, 12 führende Entlastungsanschlüsse 39. Ein Entleerungsanschluß 38 führt zum Tank 1 und ist bei sämtlichen Stellungen des Steuerkolbens 42 geöffnet.

Die Funktion der erfindungsgemäßen Bremsventileinrichtung ist wie folgt:
Zu Beginn der Fahrt wird bei geschlossenen Ventileinheiten 11, 12 das Umsteuer-Wegeventil 6 ausgehend von der in beiden Figuren gezeigten Sperrstellung in die dem Vorwärtsgang entsprechende rechte Schaltstellung geschaltet. Das von der Hydropumpe 2 unter Druck gesetzte Druckmittel beaufschlagt den zweiten Steuerflächenanteil 23 im zweiten Steuerraumbereich 20 der rechten Ventileinheit 11. Sobald die hydraulische Druckkraft die Federkraft der Feder 18 im Federraum 17 dieser Ventileinheit 11 überschreitet, wird deren Ventilkörper 14 in die Offenstellung verschoben und dadurch die in diesem Moment als Rückschlagventil wirkende Ventileinheit 11 geöffnet; dabei wirken deren zweiter Steuerraumbereich 20 und deren zweiter Steuerflächenanteil 23 als Rückschlagventil-Steuerraum bzw. Rückschlagventil-Steuerfläche.

Der hydraulische Druck im Steuerraum 15 der geöffneten Ventileinheit 11 pflanzt sich nun über den zweiten Zweigleitungsabschnitt 30 bis zum Hydromotor 3 und zusätzlich über die Verbindungsleitung 31 bis in den gegenüberliegenden Federraum 17 und über die Anschlußleitung 33 bis in den Ablaufraum 27 und den Aufnahmeraum 26 des Ventilkörpers 14 der linken Ventileinheit 12 fort. Gleichzeitig wird bei Erreichen eines oberen Grenzdruckes in der rechten Zweigleitung 7 der Steuerkolben 34 des linken Vorsteuerventils 13b bzw. der Steuerkolben 42 der Vorsteuerventileinheit 13 gegen den Druck der Druckfeder 37 bzw. der Zentrierfeder 46 nach links soweit verschoben, daß der Entlastungsanschluß 39 der linken Ventileinheit 12 völlig geöffnet und auf diese Weise deren Federraum 17 mit dem Tank 1 verbunden ist. Der zum Federraum 17 der rechten Ventileinheit 11 führende Entlastungsanschluß 39 des rechten Vorsteuerventils 13a bzw. der Vorsteuerventileinheit 13 bleibt gesperrt.

Das von der Hydropumpe 2 zugeführte Druckmittel versetzt den Hydromotor 2 und damit den angeschlossenen Verbraucher in Drehung. Das vom Hydromotor 2 abströmende Druckmittel beaufschlagt über den zweiten Zweigleitungsabschnitt 30 der linken Zweigleitung 8 den ersten Steuerflächenanteil 22 im ersten Steuerraumbereich 19 der linken Ventileinheit 12 und öffnet diese, sobald der hydraulische Druck den Federdruck der Feder 18 im Federraum 17 überschreitet. Der Druckmittelstrom fließt nun im Verhältnis der Durchflußquerschnitte über die Verbindungsleitung 31, den Federraum 17 und das linke Vorsteuerventil 13b bzw. die Vorsteuerventileinheit 13 sowie über den zweiten Steuerraumbereich 20, den ersten Zweigleitungsabschnitt 29 der linken Zweigleitung 8 und das Umsteuer-Wegeventil 6 nahezu drucklos zum Tank 1 zurück; infolge des Drucks im Druckmittelstrom verbleibt das rechte Vorsteuerventil 13a in der Schließstellung bzw. die Vorsteuerventileinheit 13 in der vorerwähnten linken Schaltstellung. Bei eventueller Überlastung in der rechten Zweigleitung 7 kann das Druckmittel über das sich öffnende Schließelement 24 des Rückschlagventils 14, 24, 25 der rechten Ventileinheit 11, den Ablaufraum 27, die Anschlußleitung 33, die Verbindungsleitung 31, den Steuerraum 16, die linke Zweigleitung 8 und das Wegeventil 6 zum Tank 1 hin entleert werden. Druckmittel, das evtl. über die Drosselstelle 32 in den Federraum 17 der linken Ventileinheit 12 gelangt, wird über den Entlastungsanschluß 39 zum Tank hin entleert.

Bei Bergabfahrt des Fahrzeugs beginnt der Hydromotor 2 unter der Schubwirkung des Verbrauchers schneller zu drehen als dem von der Hydropumpe 2 zufließenden Druckmittelstrom entspricht. Der Hydromotor 3 wirkt in diesem Fall als hydrostatische Pumpe, so daß der Druck in der rechten Zweigleitung 7 absinkt und bei Unterschreiten des oberen Grenzdrucks die Druckfeder 37 bzw. die Zentrierfeder 46 eine Verschiebung des Steuerkolbens 34 des linken Vorsteuerventils 13b bzw. des Steuerkolbens 42 der Vorsteuerventileinheit 13 nach rechts in einen Zwischenstellungsbereich hervorruft. Bei weiterem Ansteigen der Bremsbelastung des Hydromotors 3 und Unterschreiten eines bestimmten, unteren Grenzdrucks wird der Steuerkolben 34 bzw. 42 weiter nach rechts in die vorerwähnte Schließstellung verschoben.

Beim Übergang von der linken Schaltstellung in den Zwischenstellungsbereich wird die volle Abströmfläche an der Steuerkante des linken Vorsteuerventils 13b bzw. der Vorsteuerventileinheit 13 reduziert, so daß der Druckmittelablauf aus dem Federraum 17 der linken Ventileinheit 12 entsprechend der Stellung des Steuerkolbens gedrosselt wird. Durch den sich infolge und entsprechend dieser Drosselung und in Abhängigkeit vom Druckabfall an der Drossel 32 im Federraum 17 der linken Ventileinheit 12 aufbauenden hydraulischen sowie den mechanischen Druck der Feder 18 wird der Ventilkörper 14 der linken Ventileinheit 12 in Richtung Schließstellung beaufschlagt und gelangt auf diese Weise in jeweils diejenige Stellung, in der er im Kräftegleichgewicht mit der jeweiligen hydraulischen Kraft des in den ersten Steuerraumbereich 19 einströmenden Druckmittels steht. In dieser (Drossel)stellung ist der Durchflußquerschnitt zwischen dem Ventilsitz 21 und dem ersten Steuerflächenanteil 22 bzw. dessen Schrägflächenabschnitt verringert, so daß der aus dem Steuerraum 16 abfließende Druckmittelstrom gedrosselt und auf diese Weise der Hydromotor 3 abgestützt wird. Unter diesen Bedingungen wirkt die linke Ventileinheit 12 als Bremsregelventil und deren Ventilkörper 14 als Regelkolben, dessen erster Steuerflächenanteil 22 als Bremsregelventil-Steuerfläche im Zusammenwirken mit dem Ventilsitz 21 ein sanftes Abbremsen des Fahrzeugs bis zum Stillstand ermöglicht. Der erste Steuerraumbereich 19 ist dementsprechend als Bremsregelventil-Steuerraum zu bezeichnen.

Mit sich ändernder Belastung des Hydromotors 3 und damit ändernder Druckbeaufschlagung der Bremsregelventil-Steuerfläche 22 stellt sich der Regelkolben 14 in eine entsprechende neue Drosselstellung mit entsprechend veränderter Drosselung des zum Tank 1 abfließenden Druckmittelstroms ein. Sobald der Druck im Bremsregelventil-Steuerraum 19 den Druck der Schließfeder 25 im Aufnahmeraum 26 der linken Ventileinheit 12, insbesondere bei in Schließstellung befindlichem linken Vorsteuerventil 13b bzw. Vorsteuerventileinheit 13, überschreitet, öffnet das Druckbegrenzungsventil (Schließelement 24) und gibt die Durchgangsbohrung 28 frei. Der Druckmittelstrom wird nun über den Aufnahmeraum 26, den Ablaufraum 27, die Anschlußleitung 33, die Verbindungsleitung 31 und den ersten Steuerraumbereich 19 der rechten Ventileinheit 11 zum Hydromotor 2 zurückgeführt und verhindert auf diese Weise das Auftreten von Kavitationen.

Die erfindungsgemäße Bremsventileinrichtung arbeitet in der vorbeschriebenen Weise auch dann, wenn der Hydromotor 3 durch Umschalten des Umsteuer-Wegeventils 6 in die mittlere oder in die dem Rückwärtsgang entsprechende linke Schaltstellung einer Bremsbelastung ausgesetzt wird.

## Patentansprüche

1. Bremsventileinrichtung für ein im offenen Kreislauf betriebenes hydrostatisches Getriebe, insbesondere für Fahrantriebe, bei welchem dem Hydromotor (3) ein hydraulisches Druckmittel von der Hydropumpe (2) über ein Umsteuer-Wegeventil (6) wahlweise durch einen von zwei je ein Druckbegrenzungsventil (11,12) enthaltenden Zweigen (7,8) zugeführt und durch den jeweils anderen der beiden Zweige zum Tank (1) abgeführt wird und in beiden Zweigen je ein Bremsregelventil angeordnet ist, das den Durchfluß des Druckmittels durch den betreffenden Zweig in Abhängigkeit vom Druck im jeweils anderen Zweig steuert und dem ein zum Hydromotor öffnendes Rückschlagventil parallel liegt,
**gekennzeichnet** durch
eine in jedem Zweig (7, 8) angeordnete Ventileinheit (11, 12), die das Rückschlagventil, das Bremsregelventil und das Druckbegrenzungsventil dadurch in sich vereinigt, daß ihr Ventilkörper (14) als durch eine Feder (18) in Richtung Schließstellung beaufschlagter Schließkörper des Rückschlagventils, als Regelkolben des Bremsregelventils und als Gehäuse für das Schließelement (24) des Druckbegrenzungsventils ausgebildet ist und mit einer vom Druckmittel in öffnungsrichtung beaufschlagbaren, mit einer Steuerkante oder einem Ventilsitz (21) zusammenwirkenden Steuerfläche (15) einen Steuerraum (16) abgrenzt, und daß der in der Offenstellung befindliche Ventilkörper (14) in Abhängigkeit vom Druck im jeweils anderen Zweig (7 bzw. 8) in Richtung Schließstellung gesteuert beaufschlagbar ist und auf diese Weise als Regelkolben im Zusammenwirken mit der Steuerkante bzw. dem Ventilsitz (21) eine geregelte Drosselung des Druckmittelablaufs aus dem Steuerraum (16) zum Tank (1) hin bewirkt.

2. Bremsventileinrichtung nach Anspruch 1,
dadurch **gekennzeichnet,**
daß der Steuerraum (16) und ein diesem abgewandter Gegensteuerraum (17) jeder der beiden Ventileinheiten (11, 12) durch je eine mit einer Drossel (32) versehene Verbindungsleitung (31) zwecks gesteuerter Druckmittelbeaufschlagung des jeweiligen Ventilkörpers (14) in Richtung Schließstellung miteinander verbunden sind.

3. Bremsventileinrichtung nach Anspruch 2,
dadurch **gekennzeichnet**,
daß der Gegensteuerraum (17) ein die Feder (18) enthaltender Federraum (17) ist.

4. Bremsventileinrichtung nach Anspruch 2 oder 3,
**gekennzeichnet** durch
eine Vorsteuerventilanordnung (13a, 13b; 13) zur Steuerung des Druckmittelablaufs aus den Gegensteuerräumen (17) beider Ventileinheiten (11, 12) in Abhängigkeit vom Druck in dem die jeweils andere Ventileinheit (12 bzw. 11) enthaltenden Zweig (8, 7).

5. Bremsventileinrichtung nach Anspruch 4,
dadurch **gekennzeichnet**,
daß mittels der Vorsteuerventilanordnung (13) der Druckmittelablauf aus den Gegensteuerräumen (17) beider Ventileinheiten (11, 12) oberhalb eines oberen Grenzdrucks im jeweils anderen Zweig (8 bzw. 7) völlig geöffnet ist und im Bereich zwischen dem oberen und einem unteren Grenzdruck gedrosselt geregelt sowie bei Erreichen des unteren Grenzdrucks völlig geschlossen wird.

6. Bremsventileinrichtung nach Anspruch 4 oder 5,
dadurch **gekennzeichnet**,
daß die Vorsteuerventilanordnung (13) zwei stetig verstellbare 2/2-Wegeventile als Vorsteuerventile (13a, 13b) umfaßt, die über je einen Entlastungsanschluß (39) an den Gegensteuerraum (17) je einer der beiden Ventileinheiten (11, 12) und mit je einem Entleerungsanschluß (38) an den Tank (1) angeschlossen sind sowie je einen einem Druckfederraum (37) gegenüberliegenden Steuerölraum (36) aufweisen, der über einen Steuerkanal (40) an den die jeweils andere Ventileinheit (12 bzw. 11) enthaltenden Zweig (8 bzw. 7) angeschlossen ist.

7. Bremsventileinrichtung nach Anspruch 4 oder 5,
dadurch **gekennzeichnet**,
daß die Vorsteuerventilanordnung (13) als eine beiden Zweigen (7, 8) gemeinsame Vorsteuerventileinheit (13) in Form eines stetig verstellbaren federzentrierten 3/3-Wegeventils (13) ausgebildet ist, das über je einen Entlastungsanschluß (39) an die Gegensteuerräume (17) beider Ventileinheiten (11, 12) und über einen Entleerungsanschluß (38) an den Tank (1) angeschlossen ist und zwei gegenüberliegende Steuerölräume (44, 45) aufweist, die je über einen Steuerkanal (40) an je einen der Zweige (8, 7) angeschlossen sind.

8. Bremsventileinrichtung nach wenigstens einem der vorhergehenden Ansprüche,
dadurch **gekennzeichnet**,
daß der Steuerraum (16) jeder Ventileinheit (11, 12) und die zugeordnete Steuerfläche (15) durch je einen mit letzterer zusammenwirkenden Ventilsitz (21) funktionell in einen Rückschlagventil-Steuerraum (20) mit einer Rückschlagventil-Steuerfläche (23) und einen Bremsregelventil-Steuerraum (19) mit einer Bremsregelventil-Steuerfläche (22) unterteilt sind.

9. Bremsventileinrichtung nach wenigstens einem der vorhergehenden Ansprüche,
dadurch **gekennzeichnet**,
daß das Druckbegrenzungsventil (14, 24, 25) im Ventilkörper (14) jeder Ventileinheit (11, 12) mit einem durch eine Schließfeder (25) beaufschlagten Schließelement (24) ausgebildet ist, dessen Ablaufraum (27) mit dem Steuerraum (16, 19) der jeweils anderen Ventileinheit (12 bzw. 11) verbunden ist.

10. Bremsventileinrichtung nach wenigstens einem der vorhergehenden Ansprüche,
dadurch **gekennzeichnet**,
daß beide Ventileinheiten (11, 12) und die Vorsteuerventilanordnung (13) in einem gemeinsamen Ventilblock (10) ausgebildet sind.

## Claims

1. A braking valve arrangement for a hydrostatic drive operated in open circuit, in particular for vehicle drives, in which a hydraulic pressure medium is supplied to the hydraulic motor (3) from the hydraulic pump (2) via a reversing directional control valve (6) as desired through one of two branches (7, 8) each containing a pressure limiting valve (11, 12), and the pressure medium is discharged to the tank (1) through the respective other of the two branches, and a respective braking control valve is arranged in each branch which controls the passage of pressure medium through the respective branch depending on the pressure in the respective other branch and which has in parallel with it a non-return valve opening into the hydraulic motor, characterised by a valve unit (11, 12) arranged in each branch (7, 8) in which the non-return valve, the braking control valve and the pressure limiting valve are combined by forming the valve body (14) of the valve unit as a closure member of the non-return valve which is urged towards the closed position by a spring (18), as the control piston of the braking control valve and as the housing for the closure element (24) of the pressure limiting valve, and said valve body has a control surface (15) that can be urged towards the open position by the pressure medium, cooperates with a control edge or a valve seat (21) and bounds a control chamber (16), and wherein the valve body (14), when in the open position, can be controllably urged towards the closed position depending on the pressure in the respective other branch (7 or 8) and thus, in cooperation with the control edge or the valve seat (21), acts as a control piston to effect controlled throttling of the flow of pressure medium from the control chamber (16) to the tank (1).

2. A braking valve arrangement according to claim 1, characterised in that the control chamber (16) and an oppositely-facing counter-control chamber (17) of each of the two valve units (11, 12) are connected by a respective connecting line (31) provided with a throttle (32) for the purpose of controlled action of pressure medium on the respective valve body (14) towards the closed position.

3. A braking valve arrangement according to claim 2, characterised in that the counter-control chamber (17) is a spring chamber (17) containing a spring (18).

4. A braking valve arrangement according to claim 2 or 3, characterised by a pilot valve arrangement (13a, 13b; 13) for controlling the flow of pressure medium from the counter-control chambers (17) of the two valve units (11, 12) depending on the pressure in the branch (8, 7) containing the respective other valve unit (12 or 11).

5. A braking valve arrangement according to claim 4, characterised in that, by means of the pilot valve arrangement (13), the flow of pressure medium from the counter-control chambers (17) of the two valve units (11, 12) into the respective other branch (8 or 7) is completely freed when the pressure exceeds an upper limiting value, and in the region between the upper and a lower limiting pressure value it is controlled by throttling, and on reaching the lower limiting pressure it is completely shut off.

6. A braking valve arrangement according to claim 4 or 5, characterised in that the pilot valve arrangement (13) includes as pilot valves (13a, 13b) two continuously adjustable 2/2-way valves each of which is connected by a respective relief connection (39) to the counter-control chamber (17) of one of the two valve units (11, 12) and with a respective emptying connection (38) to the tank (1) and has a control oil chamber (36) opposite a compression spring chamber (37) which is connected by a control passage (40) to the branch (8 or 7) containing the respective other valve unit (12 or 11).

7. A braking valve arrangement according to claim 4 or 5, characterised in that the pilot valve arrangement (13) is a pilot valve unit (13) common to both branches (7, 8) in the form of a continuously adjustable spring-centred 3/3-way valve (13) that is connected by respective relief connections (39) to the counter-control chambers (17) of both valve units (11, 12) and by an emptying connection (38) to the tank (1), and has two control oil chambers (44, 45) opposite one another which are each connected by a respective control passage (40) to one of the branches (8, 7).

8. A braking valve arrangement according to at least one of the preceding claims, characterised in that the control chamber (16) of each valve unit (11, 12) and the associated control surface (15) are divided functionally by a respective valve seat (21) cooperating with said control surface into a non-return valve control chamber (20) with a non-return valve control surface (23) and a braking control valve control chamber (19) with a braking control valve control surface (22).

9. A braking valve arrangement according to at least one of the preceding claims, characterised in that the pressure limiting valve (14, 24, 25) in the valve body (14) of each valve unit (11, 12) comprises a closure member (24) that is acted on by a closure spring (25) and has a discharge chamber (27) that is connected to the control chamber (16, 19) of the respective other valve unit (12 or 11).

10. A braking valve arrangement according to at least one of the preceding claims, characterised in that both valve units (11, 12) and the pilot valve arrangement (13) are formed in a common valve block (10).

## Revendications

1. Dispositif de vanne de freinage pour une transmission hydrostatique fonctionnant en circuit ouvert, en particulier pour l'entraînement d'un véhicule, dans laquelle un fluide hydraulique est conduit à l'hydromoteur (3) à partir de l'hydropompe (2) en passant sélectivement par l'intermédiaire d'une vanne d'inversion (6) à plusieurs voies dans une de deux branches (7, 8) contenant chacune une soupape de limitation de pression (11, 12), et est évacué chaque fois par l'autre des deux branches vers le réservoir (1), une vanne régulatrice de freinage étant disposée dans chacune des deux branches et commandant le passage du fluide sous pression dans la branche correspondante en fonction de la pression dans l'autre branche, une soupape de retenue s'ouvrant vers l'hydromoteur étant disposée en parallèle à ladite vanne,
**caractérisé** par une unité de vanne (11, 12) disposée dans chaque branche (7, 8), qui réunit en soi la soupape de retenue, la vanne régulatrice de freinage et la soupape de limitation de pression, du fait que son clapet (14) est constitué en tant que clapet de fermeture de la soupape de retenue, sollicité par un ressort (18) dans le sens de fermeture, en tant que piston de régulation de la vanne régulatrice de pression et en tant que boîtier pour l'élément obturateur (24) de la soupape de limitation de pression, et délimite une chambre de commande (16) avec une surface de commande (15) pouvant être sollicitée par le fluide sous pression dans le sens d'ouverture, en coopérant avec un bord de commande ou un siège de soupape (21), et en ce que le clapet (14) se trouvant en position ouverte peut être sollicité de manière commandée en direction de la position de fermeture, en fonction de la pression dans l'autre branche (7 ou 8), et agit ainsi en tant que piston de régulation en coopération avec le bord de commande ou avec le siège de soupape (21) pour exercer un effet d'étranglement régulé sur l'écoulement du fluide hydraulique hors de la chambre de commande (16) vers le réservoir (1).

2. Dispositif de vanne de freinage selon la revendication 1, caractérisé en ce que la chambre de commande (16) et une chambre de commande antagoniste (17) opposée à celle-ci dans chacune des deux unités de vannes (11, 12) sont reliées l'une à l'autre chaque fois par une conduite de liaison (31) munie d'un étranglement (32) afin de soumettre le clapet respectif (14) de manière commandée à la pression du fluide hydraulique, dans son sens de fermeture.

3. Dispositif de vanne de freinage selon la revendication 2, caractérisé en ce que la chambre de commande antagoniste (17) est un logement (17) contenant le ressort (18).

4. Dispositif de vanne de freinage selon la revendication 2 ou 3, caractérisé par un dispositif de vanne pilote (13a, 13b; 13) pour commander l'écoulement du fluide hydraulique hors de la chambre de commande antagoniste (17) des deux unités de vannes (11, 12) en fonction de la pression dans la branche (8, 7) contenant chaque fois l'autre unité de vanne (12 ou 11).

5. Dispositif de vanne de freinage selon la revendication 4, caractérisé en ce qu'au moyen du dispositif de vanne pilote (13) l'orifice d'écoulement du fluide hydraulique hors de la chambre de commande antagoniste (17) des deux unités de vannes (11, 12) est complètement ouvert au-dessus d'une limite supérieure de pression dans l'autre branche (8 ou 7) et dans la zone entre la limite supérieure et une limite inférieure de pression, il est réglé par étranglement, et quand la limite inférieure de pression est atteinte, il est complètement fermé.

6. Dispositif de vanne de freinage selon la revendication 4 ou 5, caractérisé en ce que le dispositif de vanne pilote (13) comprend deux vannes à 2/2 voies à réglage continu, en tant que vannes pilotes (13a, 13b) qui sont raccordées par un raccord de décharge (39) à la chambre de commande antagoniste (17) d'une des deux unités de vannes (11, 12) et à un raccord de vidange (38) allant au réservoir (1), et présentent chacune une chambre à huile de commande (36) disposée à l'opposé d'un logement (37) d'un ressort de pression, ladite chambre (36) étant raccordée par un canal de commande (40) à la branche (8 ou 7) contenant chaque fois l'autre unité de vanne (12 ou 11).

7. Dispositif de vanne de freinage selon la revendication 4 ou 5, caractérisé en ce que le dispositif de vanne pilote (13) est sous la forme d'une unité de vanne pilote (13) commune aux deux branches (7, 8), sous la forme d'une vanne à 3/3 voies à réglage continu, centrée par un ressort, qui est raccordée par un raccord de décharge (39) aux chambres de commande antagonistes (17) des deux unités de vannes (11, 12) et par un raccord de vidange (38) au réservoir (1) et présente deux chambres à huile de commande (44, 45) opposées l'une à l'autre qui sont raccordées chacune par un canal de commande (40) à une des branches (8, 7).

8. Dispositif de vanne de freinage selon au moins une des revendications précédentes, caractérisé en ce que la chambre de commande (16) de chaque unité de vanne (11, 12) et la surface de commande associée (15) sont divisées fonctionnellement chaque fois par un siège de soupape (21) coopérant avec cette dernière, pour constituer une chambre de commande (20) de la soupape de retenue avec une surface de commande (23 ) de la soupape de retenue, et une chambre de commande (19) de la vanne régulatrice de freinage avec une surface de commande (22) de la vanne régulatrice de freinage.

9. Dispositif de vanne de freinage selon au moins une des revendications précédentes, caractérisé en ce que la soupape de limitation de pression (14, 24, 25) dans le clapet (14) de chaque unité de vanne (11, 12) est constituée par un élément obturateur (24) sollicité par un ressort de fermeture (25), dont la chambre d'évacuation (27) est reliée à la chambre de commande (16, 19) de l'autre unité de vanne (12 ou 11).

10. Dispositif de vanne de freinage selon au moins une des revendications précédentes, caractérisé en ce que les deux unités de vannes (11, 12) et le dispositif de vanne pilote (13) sont ménagées dans un bloc de vannes (10) commun.
